Europäisches Patentamt

European Patent Office

Office européen des brevets

(19)

(11) Publication number: **0 181 463**
**B1**

(12) **EUROPEAN PATENT SPECIFICATION**

(45) Date of publication of patent specification: **01.03.89**

(51) Int. Cl.⁴: **H 01 J 31/12,** H 01 J 29/32

(21) Application number: **85111742.4**

(22) Date of filing: **17.09.85**

(54) **Flat colour cathode-ray tube.**

(30) Priority: **18.09.84 JP 195305/84**

(43) Date of publication of application:
**21.05.86 Bulletin 86/21**

(45) Publication of the grant of the patent:
**01.03.89 Bulletin 89/09**

(84) Designated Contracting States:
**DE FR GB**

(56) References cited:
**EP-A-0 175 345**
**WO-A-84/03796**
**GB-A-1 292 966**
**GB-A-2 133 211**

**PATENT ABSTRACTS OF JAPAN,unexamined
applications E section,vol.6,No.95,June
3,1982.THE PATENT OFFICE JAPANESE
GOVERNMENT page 52 E 110. & JP-A-57-27
541 (HITACHI)**

**PATENT ABSTRACTS OF JAPAN,unexamined
applications,E section,Vol.8,No 200,September
13,1984.THE PATENT OFFICE JAPANESE
GOVERNMENT page 21 E 266**

(73) Proprietor: **SANYO ELECTRIC CO., LTD.
18, Keihanhondori 2-chome
Moriguchi-shi Osaka-fu (JP)**

(72) Inventor: **Hinotani, Katsuhiro
2-2, Okayamahigashi 4-chome
Shijyonawate-shi Osaka (JP)**
Inventor: **Hayama, Hajime
1335, Rokujyo-cho
Nara-shi Nara (JP)**
Inventor: **Kishimoto, Shinichi
23-2, Tsudaminami
Kaizuka-shi Osaka (JP)**
Inventor: **Miwa, Takashi
6-2-108, Nakakounoike-cho 1-chome
Higashiosaka-shi Osaka (JP)**
Inventor: **Funazo, Yasuo
15-13, Shinsenri Nishimachi 3-chome
Toyonaka-shi Osaka (JP)**
Inventor: **Kouno, Kazuhiro
10-49, Asahigaoka-cho
Hirakata-shi Osaka (JP)**

(74) Representative: **Glawe, Delfs, Moll & Partner
Patentanwälte
Postfach 26 01 62 Liebherrstrasse 20
D-8000 München 26 (DE)**

## Description

The present invention relates to a color flat cathode-ray tube (hereinafter referred to as "CRT") having a beam-indexing system incorporated therein.

## PRIOR ART

As is well known, beam indexing color CRTs has a phosphor screen comprising a multiplicity of index phosphor stripes arranged on the inner surface of a panel and three primary color phosphor stripes repeatedly arranged on the panel inner surface in a definite relation with the index phosphor stripes. When the phosphor screen is scanned by a single electron beam, an index light signal is obtained, which is utilized for the electron beam to excite the desired color phosphor with a specified amount of electron beam for the reproduction of color images.

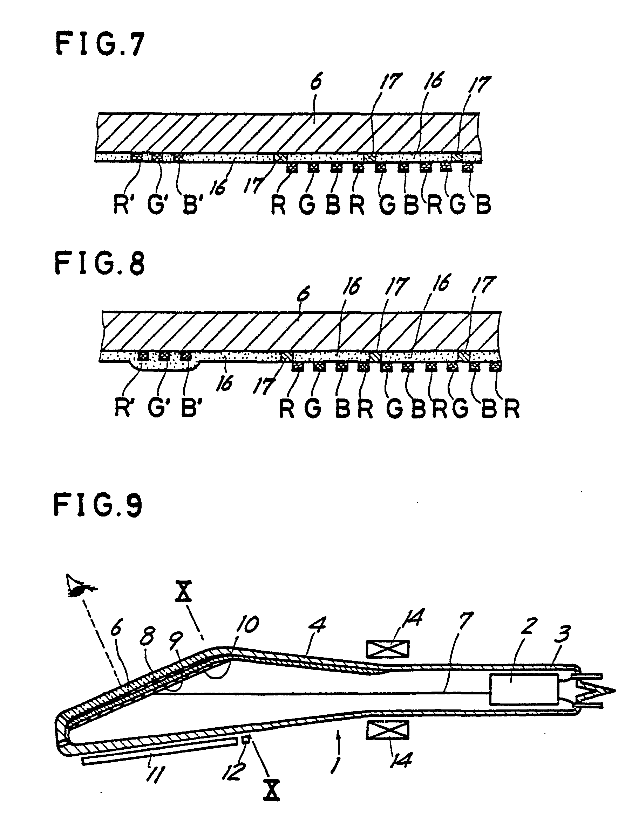

There are two types of color flat CRTs incorporating such a beam-indexing system. Fig. 9 shows the structure of one of these types. With reference to Fig. 9, a flat glass tube 1 comprises a neck 3 accommodating an electron gun 2, a funnel 4 and a panel 6 provided with a phosphor screen 5 on its inner surface. The phosphor screen 5 is inclined with respect to the central axis of the electron gun 2 (to the direction of propagation of an electron beam 7 when the beam is not deflected).

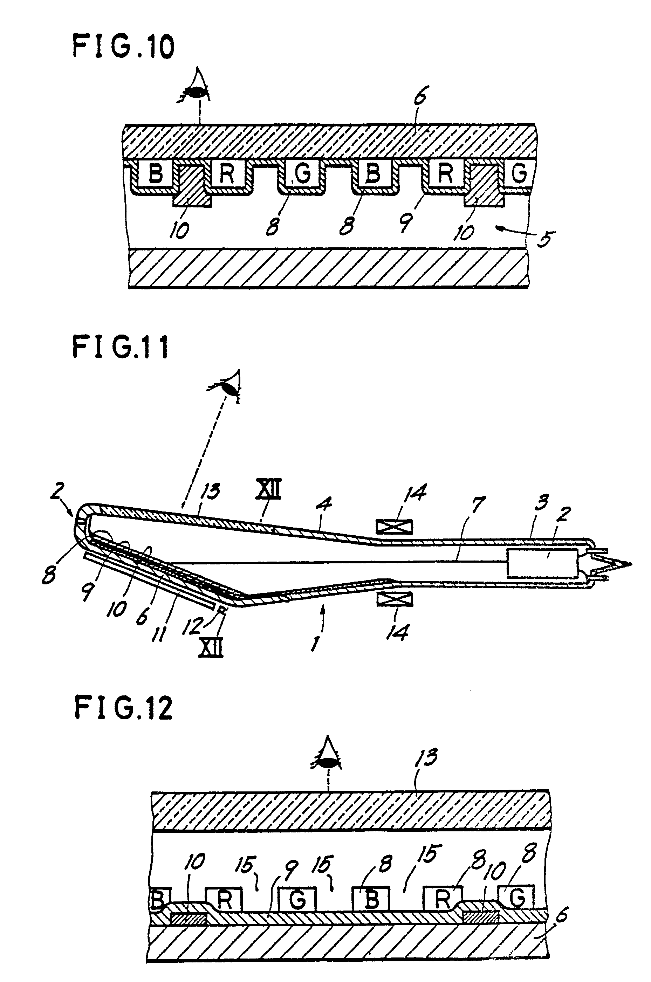

The phosphor screen 5 comprises red, green, blue, i.e., three primary color phosphor stripes 8 repeatedly arranged on the inner surface of the panel 6, a metallic layer 9 of aluminum formed over the resulting pannel inner surface, and index phosphor stripes 10 provided on the metallic layer 9 in a definite relation with the primary color phosphor stripes 8 (Fig. 10).

With such a flat CRT, the single electron beam 7 emitted by the electron gun 2 is deflected by a deflection yoke 14 and scans the phosphor screen 5 to afford index light, which strikes a light collector plate 11 disposed on the rear side of the funnel 4. The index light collected by the plate 11 is converted to a wavelength matching the sensitivity of a photodetector, from which the light is led to a photodiode 12 provided at one end of the light collector plate 11. The photodiode 12 produces an electric signal upon conversion. JP—A—57—65651 discloses a light collector plate which is usable as the plate 11.

On the other hand, the electron beam 7 passes through the metallic layer 9 and excites a color phosphor stripe 8, whereupon the stripe luminesces. The luminescence is observed through the panel 6.

However, the color flat CRT of the above construction has the drawback that the color image reproduced is insufficient in luminance because the electron beam 7 excites the color phosphor stripe 8 through the metallic layer 9. Especially because the phosphor screen 5 is arranged as inclined with respect to the axis of the electron gun 2, the beam 7 is incident on the screen 5 obliquely, with the result that the electron beam passing through the metallic layer 9 travels a longer distance. An increased proportion of the electron beam energy therefore attenuates within the metallic layer 9 to further reduce the luminance of luminescence of the color phosphor stripe 8.

JP—A—57—27541 discloses a color flat CRT of the other type which is adapted to overcome the above drawback. Figs. 11 and 12 schematically show the construction of the CRT. With reference to Fig. 11, a phosphor screen 50 comprises index phosphor stripes 10 provided on the inner surface of a panel 6, a metallic layer 9 of uniform thickness formed over the panel innser surface to cover the stripes 10, and primary color triplet phosphor stripes 8 provided on the metallic layer 9. In this case also, the index phosphor stripes 10 are of course arranged in a definite relation with the arrangement of color phosphor stripes 8.

With the color flat CRT of this structure, an electron bean 7 directly excites the color phosphor stripe 8 for luminescence, and the luminescence is reflected from the metallic layer 9 toward the interior vacuum space of the flat glass tube 1, so that a bright color image can be observed through a window formed in funnel 4.

Nevertheless, the phosphor screen 50 has a drawback. With reference to Fig. 12 showing the screen 50 in greater detail, the electron beam 7 passes through the metallic layer 9 and excites the index phosphor stripe 10, which therefore produces weak luminescence. Consequently, the index light incident on a light collector plate 11 through a panel 6 is low in intensity.

In the case of beam-indexing color TV receivers, it is necessary to obtain an index signal at all times in order to detect the position of the electron beam as is well known, so that even for the reproduction of a black image, a beam current of not lower than a specified level is passed. Accordingly, it is desirable that the amount of electron beam needed for giving the index signal for the reproduction of black level be smaller to give improved contrast to the image. However, because the metallic layer attenuates the energy of the electron beam as mentioned above, it is required that even for the reproduction of black level, the amount of electron beam be larger in the case of CRT of the second type than in the case where the electron beam directly excites the index phosphor stripes. This invariably results in lower contrast.

To assure improved contrast, it appears useful to form a black matrix material such as a carbon layer in the spaces between the color phosphor stripes other than those where the index phosphor is provided, but since the aluminum forming the metallic layer is generally porous, it is extremely difficult to form the carbon layer over the metallic layer. The black matrix material commercially available generally comprises a mixture of carbon and an aqueous solution of ammonia or like alkali material so as to render the carbon effectively separable. However, the solvent is not compatible with the metallic layer of aluminum.

EP—A—175 345, which is a prior art document under Article 54 (3) EPC, discloses a flat color CRT having a flat glass tube with first and second walls opposed to and spaced from each other, an electron gun for scanning an inner surface of the first wall with a single beam, and a phosphor screen provided on the inner surface of the first wall, the phosphor screen including black matrix material and index phosphor stripes provided on the inner surface of the first wall with the black matrix material interposed between the index phosphor stripes, stripes of a metal layer having a sufficient thickness provided on said black matrix material, and red, green and blue primary color phosphor stripes provided on said metal layer stripes and arranged repeatedly at a small spacing from each other and in a definite relation to the index stripes, and the second wall being provided with an observation window for observing the luminescence of the phosphor screen. Hereby the difficulty of applying the black matrix material in aqueous solution onto a metal layer is avoided, the stripes of metal layer being easily applicable onto the dry carbon layer. However, the step of applying the metal layer stripes still has to be performed.

It is an object of the invention to provide a beam-indexing flat CRT for reproducing bright images with improved contrast ratio.

Another object of the invention is to provide a color CRT which has no metallic layer and in which the electron beam directly excites index phosphor stripes.

Still another object of the present invention is to provide a phosphor screen for CRTs wherein the position of a mask pattern and position-matching marks relative to each other is easily adjustable.

For achieving these objects the invention provides a flat color cathode-ray tube which includes a flat glass tube having first and second walls opposed to and spaced from each other, an electron gun for scanning an inner surface of the first wall with a single beam, and a phosphor screen provided on the inner surface of the first wall, the phosphor screen including black matrix material and index phosphor stripes provided on the inner surface of the first wall with the black matrix material interposed between said index phosphor stripes, and red, green and blue primary color phosphor stripes having a sufficient thickness and arranged repeatedly above the black matrix material at a small spacing from one another and in a definite relation to the index stripes, and the second wall being provided with an observation window for observing the luminescence of the color phosphor stripes of the phosphor screen, said color phosphor stripes being formed directly on the black matrix material.

Embodiments of the invention will be described with reference to the drawings.

Fig. 1 is a view in longitudinal section showing a color flat CRT according to the present invention;

Fig. 2 is a view in cross section taken along the line II—II in Fig. 1 and showing an embodiment of the present invention;

Fig. 3 is a view showing another embodiment;

Fig. 4 to Fig. 6 are diagrams illustrating a process for forming the phosphor screen of the color CRT of the invention;

Figs. 7 and 8 are diagrams illustrating another process for forming the phosphor screen of the color CRT;

Fig. 9 is a view in longitudinal section showing a prior art conventional color flat CRT;

Fig. 10 is a view in section taken along the line X—X in Fig. 9;

Fig. 11 is a view in longitudinal section showing another conventional prior art color flat CRT; and

Fig. 12 is a view in section taken along the line XII—XII in Fig. 11.

DETAILED DESCRIPTION OF THE INVENTION

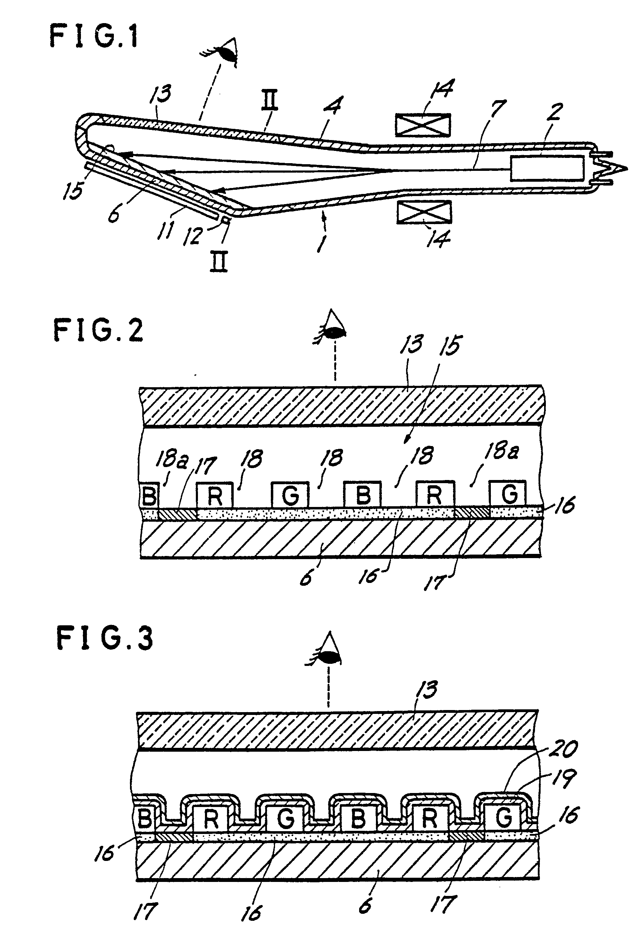

Fig. 1 schematically shows a color flat CRT of the present invention. The CRT is similar to the one shown in Fig. 11 in the construction of a flat glass tube 1 and in the arrangement of an electron gun 2, deflection yoke 14 and light collector plate 11. The CRT has a phosphor screen 15 which is characteristic of the invention and which therefore will be described below with reference to Figs. 2 and 3 which are views in section taken along the line II—II in Fig. 1.

With reference to Figs. 2 showing a first embodiment, a layer 16 of carbon or like black matrix material is formed in the shape of stripes on the inner surface of a panel 6. Also formed on the panel inner surface are index stripes 17 of a phosphor such as P47 phosphor (brand name of $Y_2SiO_5 \cdot Ce$, product of KASEI OPTONICS K.K.), with the layer 16 interposed therebetween. Primary color triplet phosphor stripes R (red), G (green) and B (blue) are arranged at a specified spacing on the black matrix material layer 16 in a definite relation to the index phosphor stripes 17 which are disposed in some (18a) of the spaces 18 between the color phosphor stripes. The color phosphor stripes have a thickness sufficient for these stripes to reach saturation luminance when luminescing to the highest luminance.

With the arrangement described above, an electron beam directly excites the color phosphor stripes R, G, B and the index phosphor stripes 17, enabling the viewer to observe bright images through an observation window 13 and giving index light of high intensity through the panel 6. Moreover, images of improved contrast ratio can be obtained because the black matrix material layer 16 is present in the spaces 18 between the color phosphor stripes other than the spaces 18a where the phosphor stripes 17 are positioned.

Furthermore, the black matrix material layer 16 on which the color phosphor stripes R, G, B are arranged blocks the luminescence of the color phosphors that otherwise would strike the light collector plate 11 through the panel 6, so that only the luminescence of the index phosphor stripes 17 is emitted toward the collector plate. Thus, the index light alone can be separated off effectively. The phosphor screen 15 has another advantage that it is easy to fabricate because there is no need to form a metallic layer and further because the black matrix material layer 16 has a large stripe width.

The color phosphor stripes R, G, B have a sufficient thickness, so that the deficit of luminance due to the absence of metallic layer can be fully compensated for. Our experiments have shown that satisfactory luminance is available at a beam current of 30 µA and anode voltage of 6 kV when the color stripes R, G and B are at least 20 µm in thickness.

Fig. 3 shows a second embodiment. Throughout Figs. 2 and 3 like parts are referred to by like numerals.

According to the second embodiment, the phosphor screen 15 of the first embodiment is entirely covered with a protective transparent thin film 19 of silicon dioxide ($SiO_2$), which is further entirely covered with a very thin electrically conductive transparent film 20, such as a thin film of ITO (indium oxide dopes with tin oxide), formed by vacuum evaporation.

The CRT, although vacuum in its interior, still contains remaining undesirable substances in the form of a gas, and anions will be produced upon ionization when electrons collide with such substances. Accordingly, the first embodiment has the likelihood that such anions strike the phosphor to break and scorch the phosphor. With the second embodiment, however, the phosphors are covered with the protective transparent thin film 19 of $SiO_2$, which prevents passage of the anions and scorching and which also prevents the phosphor stripes from peeling off.

When the $SiO_2$ film 19 is provided, negative charges will accumulate in the film 19 which is an insulator, reducing the luminescence efficiency of the phosphors. According to the present embodiment, however, a high voltage approximately at the same level as the positive voltage applied to the conductive black matrix material layer 16 is applied to the conductive transparent film 20. This eliminates the reduction of luminescence efficiency due to the negative charging.

The protective film 19 is several ten nm in thickness, while the conductive film 20 has a thickness of 20 to 30 nm. Having such a very small thickness, these films will not substantially attenuate the electron beam.

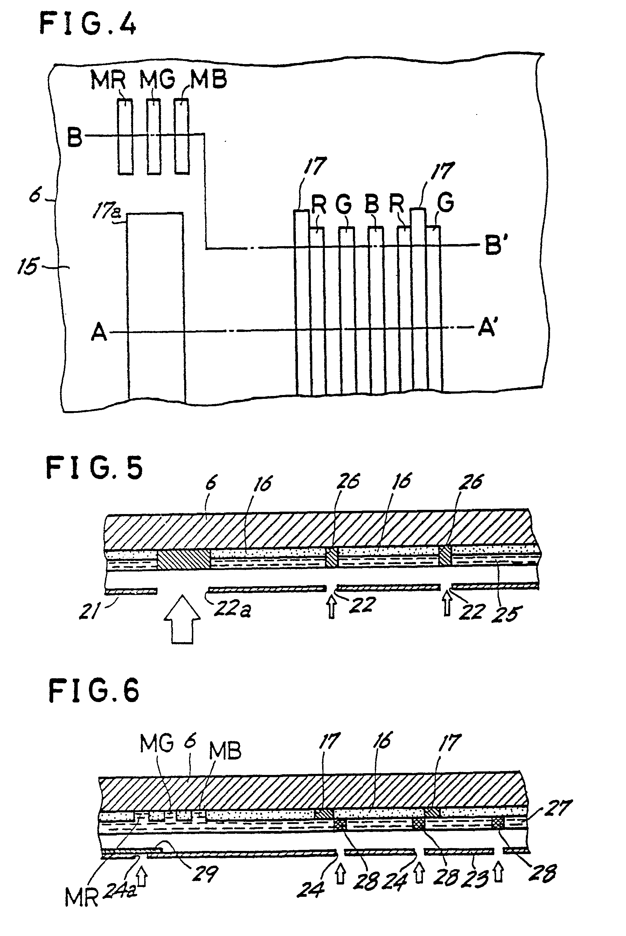

Referring to Figs. 4 to 8, processes for preparing the phosphor screen of the above embodiments will be described. Fig. 4 shows the phosphor screen 15 as viewed through the observation window 13 of the glass tube 1. Fig. 5 is a view in section taken along the line A—A' in Fig. 4 and showing an exposure procedure for forming the index phosphor stripes. Fig. 6 is a view in section taken along the line B—B' in Fig 4 and showing an exposure procedure for forming the color phosphor stripes.

The mask patterns to be used is suitably formed with apertures in conformity with the index phosphor stripes 17, position matching marks MR, MG, MB, color phosphor stripes R, G, B or run-in index phosphor stripe 17a. The light from an exposure light source passes through the apertures as seen in Figs. 5 and 6 and impinges on a photosensitive coating.

First, by the procedure stated below, a glass panel is prepared which is coated with a carbon coating composition except where the index stripes, position matching marks and run-in index stripe are to be formed.

A photoresist is uniformly applied to a glass panel 6 and then dried. Next, the coating is exposed to light through a mask pattern only where the index stripes, position matching marks (the function of which will be described later) and run-in index stripe are to be formed, whereby the photoresist is cured. When the panel is then washed with water, the exposed cured resist portions only remain on the panel inner surface.

Subsequently, a carbon (black matrix material) coating composition is uniformly applied to the entire panel inner surface, dried and thereafter immersed in an oxidizing solution, whereby the cured resist film is swollen and removed from the panel surface. Consequently, the panel is formed with a carbon coating over the entire surface except where the index stripes, matching marks and run-in index stripe are to be provided.

Next, with reference to Fig. 5, a slurry 25 of index phosphor and photoresist is uniformly applied to the panel inner surface and then dried. Subsequently, an index stripe forming mask pattern 21 is placed over the panel surface in register with the portions bearing no carbon, and the slurry coating is exposed to light through apertures 22 and 22a to cure the photoresist as indicated at 26. The uncured coating is then removed by washing with water, with the result that the cured portions 26 provide the index phosphor stripes 17 and a run-in index phosphor stripe 17a corresponding to the aperture 22a.

The primary color phosphor stripes R, G, B are formed on the carbon layer in a definite relation to the index stripes 17 thus formed, by the following method.

Because the color phosphor stripes are to be formed on the carbon layer as shown in Fig. 6, the light of the exposure light source through the apertures 24 of a color phosphor stripe forming mask pattern 23 is not observable through the carbon layer and the panel 6, and it is impossible to set the mask pattern 23 in position.

According to the present invention, however, the position matching marks MR, MG, MB are provided in corresponding relation to the positions of the color stripes, so that each mask pattern 23 can be set in position. More specifically, the three position matching marks MR, MG, MB formed outside the effective image area are in corresponding relation to the positions where the color phosphor stripes R, G, B are to be formed. For example, when the red color phosphor stripes are to be formed, the mask pattern 23 is so positioned that the light through its matching aperture 24a can be seen through the center of the red mark MR as shown in Fig. 6. Subsequently, a phosphor slurry 27 for red formed over the carbon layer 16 is exposed to light through the pattern 23 and then washed with water. Consequently, the exposed cured portions 28 only remain on the carbon layer as the red color phosphor stripes.

Similarly the green and blue phosphor stripes are formed, with each mask pattern 23 so positioned that the light through the aperture 24a can be seen at the center of the green mark MG or the blue mark MB.

To shield the phosphors in the position matching marks MR, MG, MB from the exposure light and to thereby prevent the phosphors from remaining in the marks, the matching aperture 24a of each mask pattern 23 is usually provided with a film 29 for blocking ultraviolet rays. If otherwise, the electron beam, when overscanning, would excite the phosphor remaining in the mark, and the resulting luminescence will disturb the color image. The film 29 serves to avoid such objection.

Nevertheless, the ultraviolet blocking film 29, if provided, reduces the amount of light through the aperture 24a, presenting some difficulty in positioning the mask pattern with reference to the mark.

The desired phosphor screen can be fabricated in the following manner without using the blocking film 29.

When the color triplet phosphor stripes are formed without using the blocking films 29, the phosphors R', G', B' are provided also in the matching marks MR, MG, MB as seen in Fig. 7. The phosphor portions R', G', B' thus formed are then completely covered with the black matrix material 16 as shown in Fig. 8 to prevent luminescence of these phosphor portions.

The position matching marks MR, MG, MB which are provided at one portion, may alternatively be formed at the four corners of the panel outside the effective image area.

The panel thus formed with the color phosphor stripes can be coated with SiO₂ first and then with ITO by vacuum evaporation after baking the stripes to obtain the screen shown in Fig. 3.

Although on index phosphor is provided for every four color phosphor stripes according to the embodiments described, this arrangement is not limitative but is variable unless the index stripe is provided in every space between the color stripes.

The foregoing disclosure and description of the invention are illustrative and explanatory thereof, and various changes in the size, shape and materials, as well as in the details of the illustrated construction may be made without departing from the spirit of the invention as described in the following claims.

**Claims**

1. A flat color cathode-ray tube (CRT) which includes a flat glass tube (1) having first and second walls (4, 6) opposed to and spaced from each other, an electron gun (2) for scanning an inner surface of the first wall with a single beam, and a phosphor screen (15) provided on the inner surface of the first wall, the phosphor screen (15) including black matrix material (16) and index phosphor stripes (17) provided on the inner surface of the first wall with the black matrix material interposed between said index phosphor stripes, and red (R), green (G) and blue (B) primary color phosphor stripes having a sufficient thickness and arranged repeatedly above the black matrix material (16) at a small spacing from one another and in a definite relation to the index stripes (17), and the second wall being provided with an observation window (13) for observing the luminescence of the color phosphor stripes of the phosphor screen, said color phosphor stripes (R, G, B) being formed directly on the black matrix material (16).

2. A CRT as defined in claim 1 wherein the color phosphor stripes are at least about 20 μm in thickness.

3. A CRT as defined in claim 1 wherein the phosphor screen (15) is entirely covered with a protective transparent thin film (19), and the protective film is further covered with an electrically conductive transparent film (20).

4. A CRT as defined in claim 3 wherein the protective film (19) is made of SiO₂ and has a thickness of about several ten nm.

5. A CRT as defined in claim 3 wherein the conductive film (20) is made of ITO (indium tin oxide) and has a thickness of 20 to 30 nm.

6. A CRT as defined in claim 1 wherein the black matrix material (16) is black carbon.

7. A CRT as defined in claim 1 wherein three void portions are formed in the layer of the black matrix material at least at one of the four corner portions of the phosphor screen (15) outside its effective image area to provide position matching marks (MR), (MG), (MB) for the color phosphor stripes (R), (G), (B).

8. A CRT as defined in claim 7 wherein a phosphor is provided in each of the matching marks (MR), (MG), (MB) and cured with the light from an exposure light source through an aperture in a mask pattern, and the cured phosphor is completely covered with the black matrix material.

**Patentansprüche**

1. Flache Farbbildkathodenstrahlröhre (KSR), die eine flache Glasröhre (1) umfaßt mit ersten und zweiten Wänden (4, 6), die einander gegenüber und voneinander getrennt liegen, mit einem Elektronenstrahlerzeuger (2) zum Abtasten einer Innenfläche der ersten Wand mit einem einzigen Strahl, und mit einem Leuchtstoffschirm (15), der an der Innenfläche der ersten Wand vorgesehen ist, wobei der Leuchtstoffschirm (15) ein schwarzes Matrixmaterial (16) und Indexleuchtstoffstreifen (17), die auf der Innenfläche der ersten Wand mit dem zwischen den Indexleuchtstoffstreifen angeordneten schwarzen Matrixmaterial vorgesehen sind, und rote (R), grüne (G) und blaue (B) Primärfarben-Leuchtstoffstreifen, die eine ausreichende Dicke haben und mehrmalig über dem schwarzen Matrixmaterial (16) in geringem Abstand voneinander und in einem bestimmten Verhältnis zu den Indexstreifen (17) angeordnet sind, enthält, und in der die zweite Wand mit einem Beobachtungsfenster (13) zum Beobachten der Leuchtstrahlung der Farbleuchtstoffstreifen des Leuchtstoffschirmes versehen ist, wobei die Farbleuchtstoffstreifen (R, G, B) direkt auf dem schwarzen Matrixmaterial (16) ausgebildet sind.

2. KSR nach Anspruch 1, in der die Farbleuchtstoffstreifen wenigstens etwa 20µm dick sind.

3. KSR nach Anspruch 1, in der der Leuchtstoffschirm (15) gänzlich mit einem schützenden, transparenten, dünnen Film (19) bedeckt ist, und in der der schützende Film überdies mit einem elektrisch leitenden, transparenten Film (20) bedeckt ist.

4. KSR nach Anspruch 3, in der der schützenden Film (19) aus SiO$_2$ hergestellt ist und eine Dicke von etwa einigen nm hat.

5. KSR nach Anspruch 3, in der der leitende Film (20) aus IZO (Indium Zinn Oxyd) hergestellt ist und eine Dicke von 20 bis 30 nm hat.

6. KSR nach Anspruch 1, in der das schwarze Matrixmaterial (16) schwarzer Kohlenstoff ist.

7. KSR nach Anspruch 1, in der drei Lückenbereiche in der Schicht des schwarzen Matrixmaterials an wenigstens einer der vier Eckbereiche des Leuchtstoffschirmes (15) außerhalb seiner wirksamen Bildfläche ausgebildet sind, um Positionsabstimmungsmarken (MR), (MG), (MB) für die Farbleuchtstoffstreifen (R), (G), (B) zu schaffen.

8. KSR nach Anspruch 7, in der ein Leuchtstoff in jeder der Abstimmungsmarken (MR), (MG), (MB) vorgesehen ist und mit dem Licht aus einer Belichtungsquelle durch eine Öffnung in einem Maskenmodell gehärtet, und in der der gehärtete Leuchtstoff vollständig mit dem schwarzen Matrixmaterial bedeckt ist.

**Revendications**

1. Tube cathodique couleur plat (TRC) qui comprend un tube de verre plat (1) comportant une première et une deuxième parois (4, 6) opposées et séparées l'un de l'autre, un canon à électrons (2) servant à balayer une surface interne de la première paroi avec un faisceau unique, et un écran luminescent (15) fourni sur la surface interne de la première paroi, l'écran luminescent (15) comprenant un matériau noir de matrice (16) et des bandes de luminophores index (17) fournies sur la surface interne de la première paroi avec le matériau noir de matrice interposé entre lesdites bandes de luminophores index, et des bandes de luminophores de couleurs primaires, rouge (R), verte (V) et bleu (B) d'une épaisseur suffisante et disposées de manière répétitive au-dessus du matériau noir de matrice (16) à un faible intervalle l'une de l'autre et dans une relation définie avec les bandes d'index (17), et la deuxième paroi étant pourvue d'une fenêtre d'observation (13) servant à observer la luminescence des bandes de luminophores de couleurs de l'écran luminescent, lesdites bandes de luminophores de couleur (R, V, B) étant formées directement sur le matériau noir de matrice (16).

2. TRC selon la revendication 1, dans lequel les bandes de luminophores de couleur ont une épaisseur d'au moins 20 µm environ.

3. TRC selon la revendication 1, dans lequel l'écran luminescent (15) est entirèrement recouverte d'un mince film transparent protecteur (19), et le film protecteur est en outre recouvert d'un film transparent conducteur électriquement (20).

4. TRC selon la revendication 3 dans lequel le film protecteur (19) est composé de SiO$_2$ et a une épaisseur d'environ plusieurs dizaines de nm.

5. TRC selon la revendication 3 dans lequel le film conducteur (20) est composé de OEI (oxyde d'étain et d'indium) et a une épaisseur de 20 à 30 nm.

6. TRC selon la revendication 1 dans lequel le matériau noir de matrice (16) est du noir de carbone.

7. TRC selon la revendication 1 dans lequel 3 parties vides sont formées dans la couche du matériau noir de matrice sur une au moins des quatre parties d'angle de l'écran luminscent (15) à l'extérieur de sa zone d'image réelle afin de procurer des repères de correspondance de position (RR), (RV), (RB), pour les bandes de luminophores de couleur (R), (V), (B).

8. TRC selon la revendication 7 dans lequel un luminophore est fourni dans chacun des repères de correspondance (RR), (RV), (RB) et durci par la lumière provenant d'une source lumineuse d'exposition à travers une ouverture pratiquée dans un modèle de masque, et le luminophore durci est complètement recouvert avec le matériau noir de matrice.

FIG.1

FIG.2

FIG.3

# FIG. 4

MR MG MB

B

6

15

17a

17          R G B R G          17

B'

A                                                    A'

# FIG. 5

6    16    26    16    26

21    22a    22    22    22    25

# FIG. 6

MG 6 MB          17    16    17

27

MR 24a    29          24    28 24    28 23    28

## FIG.7

R' G' B'  16  17  R G B R G B R G B

## FIG.8

R' G' B'  16  17  R G BR GBR G BR

## FIG.9

FIG.10

B R G B R G

10    8    8    9    10    5

FIG.11

2   13   XII   4   14   7   3   2

8

9   10   6   11   12   XII   1   14

FIG.12

13

10   15   9   15   8   15   8   10   8

B R G B R G

6